# EUROPÄISCHE PATENTSCHRIFT

(11) **EP 3 478 782 B1**
(45) Veröffentlichungstag und Bekanntmachung des Hinweises auf die Patenterteilung: **13.04.2022**
(21) Anmeldenummer: 17734322.5
(22) Anmeldetag: 30.06.2017
(51) Int. Cl.: C09J 5/06, C09J 175/06, C09J 175/08, C09J 7/20, C08G 18/08, C08G 18/42, C08G 18/70, C08G 18/79, C09J 7/25, C09J 7/35

(54) **THERMISCH AKTIVIERBARER LATENT REAKTIVER KLEBEFILM**
THERMALLY ACTIVATABLE LATENT REACTIVE ADHESIVE FILM
FILM ADHÉSIF À RÉACTION LATENTE PAR ACTIVATION THERMIQUE

(30) Priorität: 30.06.2016 DE 102016007914
(43) Veröffentlichungstag der Anmeldung: 08.05.2019
(73) Patentinhaber: Lohmann GmbH & Co. KG, 56567 Neuwied (DE)
(72) Erfinder: BUSCH, Christian, 56567 Neuwied (DE); KOPF, Patrik, 56567 Neuwied (DE); SEGSCHNEIDER, Daniela, 53489 Sinzig (DE)
(74) Vertreter: Okoampah, Rene
(86) Internationale Anmeldenummer: PCT/EP2017/066294
(87) Internationale Veröffentlichungsnummer: WO 2018/002312

(56) Entgegenhaltungen:
- EP-A1- 1 249 480
- WO-A1-2016/066441

## Beschreibung

### Technisches Gebiet

Bei der vorliegenden Erfindung handelt es sich um einen thermisch aktivierbaren latent reaktiven Klebefilm mit einem thermoplastischen Polyurethan (TPU) als Trägerfolie.

### Stand der Technik

Klebefilme sind flächige Gebilde wie zum Beispiel Klebebänder, die durch Ausformen (Beschichten) von Klebemassen entstehen. Bei lösemittelhaltigen Klebemassen wird nach dem Beschichten noch das Lösemittel weg getrocknet, um zum Klebefilm zu gelangen. In diesem Falle handelt es sich um mehrlagige Klebefilme.

Klebefilme werden bisweilen auch als Klebefolien bezeichnet. In der Regel, so auch hier, sind die Klebefilme zumindest einseitig mit einem antiadhäsiven Flächengebilde, dem sogenannten Liner abgedeckt. Oftmals wird die Klebemasse direkt auf diesen Liner beschichtet und damit der Klebefilm gebildet. Das Material und die Trennwirkung des Liners wird einmal so gewählt, dass eine optimale Beschichtung und Trocknung gewährleistet ist und zum anderen so, dass der Klebefilm bei der Weiterverarbeitung und Anwendung gut handhabbar ist, insbesondere dass der Liner sich bei der Anwendung wieder leicht ablöst.

Trägerfolien sind nicht-haftklebrige Flächengebilde aus thermoplastischen Polymeren. Diese sind direkt mit einer oder zwei Schichten der Klebemassen verbunden und bilden zusammen mit diesen Schichten den Klebefilm.

Unter thermisch aktivierbaren Klebefilmen sollen hier Filme verstanden werden, die durch Zufuhr von thermischer Energie (Temperatur) und optional Druckeinwirkung aktiviert werden, das heißt mit Substraten verklebt werden. Rein thermisch aktivierbare Klebefilme schmelzen dabei auf. Der Verbund wird beim Abkühlen durch die rein physikalische Verfestigung gebildet. Der Vorgang ist in der Regel reversibel. Die Materialien sind rein thermoplastisch.

Unter thermisch aktivierbaren reaktiven Klebemassen sollen hier solche verstanden werden, die (in der Regel zusätzlich) zum physikalischen Verfestigen noch chemisch abbinden. Dies geschieht durch eine Reaktivkomponente, die in der Klebemasse enthalten ist und ein chemisches Vernetzen oder Aushärten der Klebemasse erzeugt. Diese Verfestigung ist in der Regel irreversibel und kann durch erneute Zufuhr von thermischer Energie nicht rückgängig gemacht werden. Reaktivkomponenten können zum Beispiel thermisch aktivierbare Diisocyanate sein, die mit polymer gebundenen Hydroxy-, Amino- oder Amidgruppen reagieren.

Thermisch aktivierbare reaktive Klebefilme umfassen trägerlose oder auf einen Träger aufgebrachte thermische Klebemassen.

Latent reaktive Klebefilme sind solche, die bei Normalklima nicht oder nur über einen Zeitraum von Monaten aushärten und damit lagerstabil sind, die aber bei deutlich höheren Temperaturen aktivierbar sind und aushärten. Die latente Reaktivität bietet den Vorteil, dass diese Klebefilme bei Normalklima gelagert, transportiert und weiter verarbeitet werden können (beispielsweise zu Stanzteilen) bevor sie dann an der Verklebungsstelle zum Einsatz kommen und ausgehärtet werden.

Als "strukturelle Verklebung" wird eine Verklebung bezeichnet, bei der eine mögliche Bruchstelle nicht unbedingt in der Klebstoffschicht bzw. im Trägermaterial mit der Klebstoffschicht/den Klebstoffschichten zwischen den zu verklebenden Komponenten liegen muss, sondern mit gleicher Wahrscheinlichkeit an jeder anderen Stelle der durch den strukturellen Klebstoff verklebten Gegenstände auftreten kann.

Thermisch aktivierbare reaktive Klebefilme sind aus der Patent- und sonstigen Literatur sowie auch als Produkte bekannt. So beschreibt z.B. die EP 2391686 B1 ein hitzeaktivierbares Klebeband, bestehend aus einem Vliesträger und zwei thermoplastische Schichten. Der Vliesträger soll zum einen die Dämpfungseigenschaften verbessern und in der Heißpresse das Ausfließen der Thermoplasten verhindern. Der Vliesträger hat den Nachteil, dass er bei hohen Scher- oder Torsionsbelastungen, wie sie bei der Anwendung von thermisch aktivierten, reaktiven Klebefilmen auftreten, eine Sollbruchstelle darstellt, die bei höheren Belastungen brechen kann. Das heißt, höhere Festigkeiten können damit nicht erzielt werden.

Ebenfalls bekannt sind Klebefilme mit einer Polyurethanfolie als Trägermaterial. So beansprucht DE 202004019782 U1 einen Klebefilm, aufgebaut aus einer Polyurethanfolie mit hohem Schmelzpunkt in der Mitte und einer ein- oder beidseitig angebrachten Schicht aus niedrig schmelzender Folie. Diese niedrig schmelzende Folie dient der besseren Verklebbarkeit der Polyurethanfolie. Angaben über die "Chemie" der niedrig schmelzenden Folien werden nicht gemacht. Es bleibt auch unklar, ob es sich um thermisch aktivierbare reaktive oder lediglich thermoplastische Materialien handelt. US 8927106 B2 beschreibt eine mehrlagige Schutzfolie für eine Fahrzeugoberfläche, die zwischen einer Polyurethan- und einer Haftklebstoffschicht einer Schicht thermoplastischen Polyurethans aufweist.

Auch reaktive Polyurethanklebstoffe sind bekannt, z.B. aus DE 102004057292 A1 wo ein zweistufiges Verfahren zur Herstellung einer isocyanatreaktiven Polyurethanzusammensetzung thematisiert wird oder aus KR 2016035213 A, in der eine Klebefilm zur Fixierung von Teilen eines Mobilfunkgeräts beschrieben wird. Dieser Film besteht aus einem TPU-Träger, der beidseitig mit einer Klebstofflage beschichtet ist, wobei die TPU-Trägerschicht und die Klebstofflage thermisch expandierbare Mikrokapseln enthalten.

Ebenfalls bekannt sind thermoplastische Polyurethanklebstoffe zur Verklebung von Textilien, so beispielsweise aus EP 2552987 B1.

Keines dieser Schutzrechte aber ist gerichtet auf einen thermisch aktivierbaren latent reaktiven Klebefilm, bestehend aus einer Trägerfolie aus thermoplastischem Polyurethan, die mindestens einseitig mit einer latent reaktiven, thermisch aktivierbaren Klebemasse beschichtet ist.

EP 1 249 480 A1 zeigt einen Klebefolienstreifen.

WO 2016/066441 A1 zeigt die Verklebung zweier Substrate mittels latentreaktiver Klebefilme.

### Darstellung der Erfindung

Ausgehend von dem bekannten Stand der Technik ist es eine Aufgabe der vorliegenden Erfindung, einen verbesserten Klebefilm bereitzustellen.

Diese Aufgabe wird mittels eines Klebefilms mit den Merkmalen des Anspruchs 1 gelöst. Vorteilhafte Ausgestaltungen ergeben sich aus den Unteransprüchen.

Entsprechend wird ein thermisch aktivierbarer reaktiver Klebefilm, angegeben, der eine Trägerfolie aus thermoplastischem Polyurethan umfasst, die mindestens einseitig mit einer latent reaktiven, thermisch aktivierbaren Klebemasse beschichtet ist.

Durch die TPU-Trägerfolie ist ein vergleichsweise verringertes Ausbluten bei der thermischen Aktivierung, insbesondere bei größeren Klebefilmdicken gegeben.

Die mechanische Stabilisierung ist wesentlich besser durch die härtere TPU-Zwischenschicht, auch bei Raumtemperatur. Als Folge davon ist eine deutlich verbesserte Stanzbarkeit gegeben.

Die Elastizität des Gesamtverbundes wird besser, da die TPU-Zwischenschicht Elastizität mit in das Klebesystem bringt.

In einer bevorzugteN Ausgestaltung handelt es sich bei der Klebemasse um eine Klebemasse auf Basis Polyurethan, das thermisch aktivierbares Isocyanat enthält.

In einer bevorzugten Ausführungsform liegt der Erweichungsbereich der Trägerfolie aus thermoplastischem Polyurethan bei größer 120°C, bevorzugt bei größer 150°C. Die TPU-Trägerfolie verringert nicht die Verbundfestigkeit im verklebten Zustand. Trotz des mehrlagigen Aufbaus mit daraus resultierenden Grenzschichten und obgleich ein erheblicher Teil des Klebefilms aus thermoplastischem Material besteht, ergibt sich insgesamt eine ebenso hohe Verbundfestigkeit und Wärmebeständigkeit wie bei homogenem reaktivem Aufbau des Klebefilms. Dies zeigt sich an den Messwerten für die Zugscherfestigkeit und die "Shear Adhesive Failure Temperature" (SAFT-Wert). Voraussetzung ist, dass der Erweichungsbereich der Trägerfolie über oder im Bereich der Verklebungstemperatur der reaktiven Klebemasse liegt.

Wenn bei der Verklebungstemperatur sowohl die reaktive Klebemasse aktiviert wird als auch die Trägerfolie erweicht, so bietet das den Vorteil, dass die Grenzschichten verfliessen können und deshalb einen starken Verbund bilden.

In einer Weiterbildung besteht die Trägerfolie aus thermoplastischem Polyurethan im wesentlichen aus Polyetherpolyurethan.

In einer weiter bevorzugten Ausführungsform handelt es sich bei dem thermisch aktivierbaren Isocyanat um ein Isocyanat auf Basis Isophorondiisocyanat oder Toluoldiisocyanat.

In einer weiteren bevorzugten Weiterbildung handelt es sich bei der Klebemasse um eine Klebemasse auf Basis Polyesterpolyurethan.

In einer weiter bevorzugten Ausgestaltung liegt die Gesamtdicke bei 40 bis 400 µm. Entsprechend ist die Herstellung dickerer thermisch aktivierbarer reaktiver Klebefilme für die Überbrückung größerer Klebefugen oder für die Verklebung rauer Oberflächen möglich.

In einer weiter bevorzugten Ausführungsform ist das Verhältnis der Dicke der Trägerfolie aus thermoplastischem Polyurethan zu der Summe der Dicke der Schicht(en) der Klebemasse größer als 0,3 und bevorzugt ungefähr 1.

Durch die Variation der Schichtdicken können bestimmte Eigenschaftskombinationen von thermoplastischer Trägerfolie und reaktiver Klebemasse optimiert werden. Insbesondere zeigt sich dann ein gutes Eigenschaftsprofil, wenn das Verhältnis der Dicke der Trägerfolie zu der Summe der Dicken der Klebemasseschichten größer als 0,3 und insbesondere ungefähr gleich 1 ist.

Ferner ist der erfindungsgemäße Klebefilm dazu geeignet zur Verklebung von Bauteilen in der Elektronikindustrie und/oder zur Verklebung von Textilien verwendet zu werden.

Die Vorteile eines solchen Systems gegenüber einem einschichtigen Aufbau aus thermoplastischer Trägerfolie sind:
- Mit den erfindungsgemäßen Aufbau liegt ein thermisch aktivierbares, d.h. im Endzustand irreversibel ausgehärtetes Produkt vor.
- Das Produkt ist bei geringeren Temperaturen schmelzbar / verklebbar als eine reine TPU-Folie (wie auch in DE 202004019782 U1 beschrieben), da die Außenschichten gegenüber der Trägerfolie mit geringeren Schmelzpunkten ausgestattet sind.
- Es sind Eigenschaftskombinationen aus 2 Thermoplasten möglich, resultierend .z.B. in unterschiedliche Härten. Über die jeweilige Schichtdicken kann das eine oder andere Material dominieren.

### Detaillierte Beschreibung bevorzugter Ausführunqsbeispiele

### Thermisch aktivierbare reaktive Klebemassen

Thermisch aktivierbare reaktive Klebemassen sind dem Fachmann geläufig. Es handelt sich dabei im wesentlichen um thermoplastische Polymere wie zum Beispiel Polyester, Copolyester, Polyolefine, Polyamide oder Polyurethane, die mit Reaktivharzen versetzt sind oder die selbst reaktive Komponenten enthalten. Reaktivharze kommen beispielsweise aus der Gruppe der Epoxyharze, Melaminharze, Phenolharze oder der Polyisocyanate. Thermisch aktivierbare reaktive Klebemassen sind auch solche auf Basis Epoxidharz, bestehend im wesentlichen aus flüssigen und festen Epoxidharzen, Schlagzähmodifikatoren und latent reaktiven Vernetzungssystemen wie zum Beispiel Dicyandiamid. Weitere thermisch aktivierbare reaktive Klebemassen sind solche auf Basis Cyanacrylat, die durch Feuchteeinfluss vernetzen und zum Beispiel in WO 2013/174430 beschrieben sind.

Bevorzugt basieren die erfindungsgemäßen Klebemassen auf Polyurethan, besonders bevorzugt auf Polyesterpolyurethan. Bevorzugt handelt es sich bei dem Reaktivharz um ein Polysisocyanat, besonders bevorzugt um ein Polyisocyanat auf Basis Isophorondiisocyanat (IPDI) oder Toluoldiisocyanat (TDI).

Bei der thermischen Aktivierung wird zum einen das thermoplastische Polymer "aktiviert", so dass es weich wird bis zur Schmelze. Zum anderen wird aber das Reaktivharz bei der gleichen oder einer höheren Temperatur aktiviert. Das heißt, erst ab dieser Aktivierungstemperatur reagieren die funktionellen Gruppen des Reaktivharzes mit den Grundpolymeren und die Klebemasse härtet aus. Bei geringeren Temperaturen sollen die Reaktivharze nicht reagieren, damit der reaktive Klebefilm über Monate haltbar ist. Verschiedene Mechanismen sind möglich, die bei der Aktivierungstemperatur die Aushärtung starten: Beispielsweise kann das Reaktivharz in fester Form vorliegen und erst bei der Aktivierungstemperatur schmelzen und damit verfügbar gemacht werden. Ein anderer Weg ist die Deaktivierung der Reaktivharze durch Oberflächendeaktivierung. Diese Deaktivierung wird bei der Aktivierungstemperatur (z.B. ab der Glasübergangstemperatur) aufgebrochen und die Aushärtung startet. Eine weitere Möglichkeit ist die chemische Blockung der reaktiven Gruppen. Bei einer definierten Temperatur ist die Blockierung reversibel und die Aushärtung startet. Eine weitere Methode ist die Unlöslichkeit des Reaktivharzes im (teil-)kristallinen Polymer. Ab der Dekristallisationstemperatur ist die Löslichkeit gegeben und die Aushärtung startet.

Bevorzugt handelt es sich im Rahmen dieser Erfindung um oberflächendeaktiviertes Polyisocyanat und um Isocyanate, die bei der Dekristallisationstemperatur aktiv werden.

### Trägerfolien

Bei den Trägerfolien können alle dem Fachmann bekannten und geeigneten thermoplastischen Polymere wie zum Beispiel Polyester, Polyolefine, Polyamide, Polyacrylate oder Polyurethane eingesetzt werden. Bevorzugt wird eine thermoplastische Polyurethanfolie eingesetzt, besonders bevorzugt eine Polyurethanfolie aus Polyetherpolyurethan.

Der Schmelzpunkt oder Schmelzbereich der Trägerfolie wird so gewählt, dass er bei oder über der Aktivierungstemperatur der reaktiven Klebemasse beziehungsweise der Verklebungstemperatur liegt. Damit kann gewählt werden, ob die Trägerfolie beim Verklebungsvorgang fest bleibt, weich wird oder schmilzt. Innerhalb dieser Möglichkeiten kann der Fachmann die mechanischen Eigenschaften vor und nach der Verklebung optimieren. Bevorzugt liegt der Erweichungsbereich der erfindungsgemäßen Trägerfolie über 120°C, besonders bevorzugt über 150°C.

Die Dicke der Folie wird zusammen mit den Dicken der Klebeschichten so gewählt, dass eine Gesamtdicke des Klebefilms von 40 bis 400 µm vorliegt. Dabei kann der Fachmann die Verteilung der Dicken auf die Trägerfolie und den oder die Klebeschichten so auswählen, dass die mechanischen Eigenschaften vor und nach der Verklebung und das Ausbluten optimiert werden.

### Herstellverfahren

Der Klebefilm wird durch ein- oder beidseitiges Beschichten der Trägerfolie mit der reaktiven Klebemasse hergestellt. Die reaktive Klebemasse kann als 100% System, d.h. lösemittelfrei, als lösemittelhaltige Klebemasse oder als Dispersionsklebemasse vorliegen. Bevorzugt liegt die Klebemasse als Dispersionsklebemasse vor und wird gemischt aus einer Polyurethandispersion und einer Dispersion des deaktivierten Isocyanats. Die Dispersionsklebemasse wird mittels geeignetem Beschichtungsverfahren auf den Liner beschichtet und getrocknet. Diese flächige Klebemasse wird dann auf eine Seite der Trägerfolie laminiert, so dass ein festes Laminat entsteht. Eine zweite flächige Klebemasse wird auf die zweite Seite der Trägerfolie laminiert und der zweite Liner abgezogen. Somit erhält man einen Klebefilm bestehend aus einer mittigen Trägerfolie, zwei Schichten reaktiver Klebemasse die mindestens auf einer Seite abgedeckt sind durch einen Liner.

### Verklebungsprozess

Die zu verklebenden Materialien ergeben sich aus dem Anwendungsfall. Gängige Materialien sind hier Kunststoffe, Metalle, Glas und Textilien. Beispielhaft seien angeführt die Verklebung von Substraten aus Polycarbonatplatten miteinander und die Verklebung von Polycarbonatplatte mit Aluminiumplatte. Anwendungsfälle finden sich beispielsweise in der Elektronikindustrie, im Komponentenbau der Automobilindustrie und in der Textillaminierung bei Technischen Textilien.

Der Verklebungsprozess erfolgt dabei in der Regel in diesen Schritten:
1. Fixierung des Klebefilms auf einem Substrat. Das geschieht rein mechanisch oder auch durch Vorlaminieren, d.h. Erwärmen des Klebefilms und/oder des Substrats auf eine Temperatur, bei der die dem Substrat zugewandten Klebemasseschicht aufschmilzt, aber noch nicht chemisch aktiviert wird. Durch das Aufschmelzen kann der Klebefilm das erste Substrat benetzen. Nach Abkühlen ist das erste Substrat vorläufig gebunden, aber der Film noch nicht ausgehärtet.
2. Abziehen des noch vorhandenen Liners
3. Platzierung des zweiten Substrats auf der offenen Seite des Klebefilms
4. Beaufschlagung von Druck und Temperatur auf den Verbund für eine festgelegte Zeit. Hierbei findet eine thermische Aktivierung aller Schichten statt.
5. Gegebenenfalls eine Kühlung des Verbundes

### Experimenteller Teil:

### Materialien

| Material | Lieferant | Beschreibung |
|---|---|---|
| Dispercoll U 56 | Covestro AG | Wäßrige Polyurethan-Dispersion aus teilkristallinem Polyesterpolyurethan. Das Polyurethan hat einen Schmelzpunkt von ca. 60°C. |
| Dispercoll U XP 2702 | Covestro AG | Wäßrige Polyurethan-Dispersion aus teilkristallinem Polyesterpolyurethan für die Vernetzung mit IPDI-Trimer. Das Polyurethan hat einen Schmelzpunkt von ca. 60°C. |
| Dispercoll BL XP 2514 | Covestro AG | Wäßrige Dispersion eines reaktiven Isocyanats auf Basis TDI-Dimer. |
| Aqualink D-HT | Aquaspersions Ltd. | Wäßrige Dispersion eines oberflächendeaktivierten IPDI-Trimers. Start der Aktivierung ab ca. 70°C. |
| Borchigel A LA | Borchers GmbH | Verdicker auf Basis eines anionischen Acrylpolymers |
| Platilon U073, Dicke 50µm und 100µm | Covestro AG | Trägerfolie: Polyurethanfolie auf Basis Polyetherpolyurethan, Erweichungspunkt 160-200°C |

### Beispiele

Reaktive Klebemasse 1:
   100 Teile Dispercoll U XP 2702, 20 Teile Aqualink D-HT und 1,3 Teile Borchigel A LA werden durch Rühren gemischt.
Reaktive Klebemasse 2:
   100 Teile Dispercoll U 56, 13 Teile Dispercoll BL XP 2514 und 0,5 Teile Borchigel A LA werden durch Rühren gemischt.

### Beispiel 1:

Auf einem Liner (silikonisiertes Glassine Papier) wird die reaktive Klebemasse 1 mittels Rakel beschichtet. Anschliessend wird bei 50°C für 10 min getrocknet. Die Trocknungstemperatur darf 50°C nicht überschreiten, um keine vorzeitige thermische Aktivierung hervorzurufen. Die Auftragsmenge wird so eingestellt, dass nach dem Trocknen eine Schichtdicke von 50 µm resultiert. Dieser Klebemassefilm wird mittels Kaschierung bei 60°C auf die Polyurethanfolie mit der Dicke 100 µm aufgebracht. Auf der Rückseite der Polyurethanfolie wird gleichsam ein zweiter 50 µm Klebemassefilm 1 aufkaschiert und ein Liner abgezogen. Somit erhält man einen thermisch aktivierbaren reaktiven Klebefilm mit der Dicke 200 µm.

### Beispiel 2:

Auf einem Liner (silikonisiertes Glassine Papier) wird die reaktive Klebemasse 1 mittels Rakel beschichtet. Anschliessend wird bei 50°C für 10 min getrocknet. Die Trocknungstemperatur darf 50°C nicht überschreiten, um keine vorzeitige thermische Aktivierung hervorzurufen. Die Auftragsmenge wird so eingestellt, dass nach dem Trocknen eine Schichtdicke von 25 µm resultiert. Dieser Klebemassefilm wird mittels Kaschierung bei 60°C auf die Polyurethanfolie mit der Dicke 50 µm aufgebracht. Auf der Rückseite der Polyurethanfolie wird gleichsam ein zweiter 25 µm Klebemassefilm 1 aufkaschiert und einer der beiden dann vorhandenen Liner abgezogen. Somit erhält man einen thermisch aktivierbaren reaktiven Klebefilm mit der Dicke 100 µm.

### Beispiel 3:

Auf einem Liner (silikonisiertes Glassine Papier) wird die reaktive Klebemasse 2 mittels Rakel beschichtet. Anschliessend wird bei 50°C für 10 min getrocknet. Die Trocknungstemperatur darf 50°C nicht überschreiten, um keine vorzeitige thermische Aktivierung hervorzurufen. Die Auftragsmenge wird so eingestellt, dass nach dem Trocknen eine Schichtdicke von 25 µm resultiert. Dieser Klebemassefilm wird mittels Kaschierung bei 60°C auf die Polyurethanfolie mit der Dicke 50 µm aufgebracht. Auf der Rückseite der Polyurethanfolie wird gleichsam ein zweiter 25 µm Klebemassefilm 2 aufkaschiert und einer der beiden dann vorhandenen Liner abgezogen. Somit erhält man einen thermisch aktivierbaren reaktiven Klebefilm mit der Dicke 100 µm.
Vergleichsbeispiel 1:
   Auf einem Liner (silikonisiertes Glassine Papier) wird die reaktive Klebemasse 1 mittels Rakel beschichtet. Anschliessend wird bei 50°C für 10 min getrocknet. Die Trocknungstemperatur darf 50°C nicht überschreiten, um keine vorzeitige thermische Aktivierung hervorzurufen. Die Auftragsmenge wird so eingestellt, dass nach dem Trocknen eine Schichtdicke von 50 µm resultiert. Vier dieser Schichten werden mittels Kaschierung bei 60°C aufeinander aufgebracht. Somit ergibt sich eine Dicke von 200 µm eines thermisch aktivierbaren reaktiven Klebefilms ohne Trägerfolie.
Vergleichsbeispiel 2:
   Auf einem Liner (silikonisiertes Glassine Papier) wird die reaktive Klebemasse 2 mittels Rakel beschichtet. Anschliessend wird bei 50°C für 10 min getrocknet. Die Trocknungstemperatur darf 50°C nicht überschreiten, um keine vorzeitige thermische Aktivierung hervorzurufen. Die Auftragsmenge wird so eingestellt, dass nach dem Trocknen eine Schichtdicke von 50 µm resultiert. Zwei dieser Schichten werden mittels Kaschierung bei 60°C aufeinander aufgebracht. Somit ergibt sich eine Dicke von 100 µm eines thermisch aktivierbaren reaktiven Klebefilms ohne Trägerfolie.

### Messmethoden:

### Zugscherfestigkeit

### Probenvorbereitung

Zwischen zwei Platten aus Polycarbonat (PC, Breite 2,5 cm, Länge 7 cm, Dicke 0,3 cm) wird der Klebefilm (nach Abzug des Liners) mit einer Fläche von 312,5 mm² überlappend und kantenbündig fixiert. Der Verklebungsprozess findet in einer Heißpresse bei 120°C und einem Druck von 2,5 bar für 5min. statt. Anschließend werden die Prüflinge unter Druck auf Raumtemperatur gekühlt und für 24h klimatisiert gelagert.

### Prüfung

Die Zugscherprüfung findet auf einer Zwick-Prüfmaschine zwischen zwei Klemmbacken mit einer Zuggeschwindigkeit von 2mm/min statt. Das Maximum der Kraft-Weg-Kurve ist die Zugscherfestigkeit und wird in MPa (=N/mm²) angegeben. Es wird der Mittelwert aus 5 Prüflingen genommen.

### SAFT-Test

### Probenvorbereitung

Zwischen zwei Folien aus Polyester (PET, Breite 2,5 cm, Länge 7 cm, Dicke 0,1mm) wird der Klebefilm (nach Abzug des Liners) mit einer Fläche von 312,5 mm² überlappend und kantenbündig fixiert. Der Verklebungsprozess findet in einer Heißpresse bei 120°C und einem Druck von 2,5 bar für 5min. statt. Anschließend werden die Prüflinge unter Druck auf Raumtemperatur gekühlt und für 24h klimatisiert gelagert.

### Prüfung

Die Prüflinge werden senkrecht in einen Umlufttrockenschrank gehangen und mit je 10N Gewicht belastet. Die Starttemperatur beträgt 50°C. Alle 30 min wird kontrolliert ob die Proben halten und die Temperatur um 10 Kelvin angehoben. Beendet wird der Test bei maximal 200°C. Der SAFT-Wert ist dann diejenige Temperatur, bei der alle drei Prüflinge noch gehalten haben.

### Push-out Test

### Probenvorbereitung

Der Klebefilm wird mit einer Rondenstanze zu einem Durchmesser von 18mm ausgestanzt.

Das erste Substrat besteht aus einer Platte aus Polycarbonat oder Aluminium (Breite 2,5 cm, Länge 7 cm, Dicke 0,3 cm), die mittig mit einem Loch mit Durchmesser 9 mm versehen wurde. Der runde Klebefilm wird auf dieses Substrat mittig zum Loch platziert. Das zweite Substrat besteht aus einer runden Platte aus Polycarbonat oder Aluminium in der gleichen Größe wie der Klebefilm (Durchmesser 18mm). Der Verklebungsprozess des Prüflings findet in einer Heißpresse bei einem Druck von 2,5 bar für 5min. statt. Anschließend werden die Prüflinge unter Druck auf Raumtemperatur gekühlt und für 24h klimatisiert gelagert.

Zwei verschiedene Presstemperaturen wurden gewählt:
Presstemperatur 120°C: Es wird Polycarbonat mit Polycarbonat verklebt.
Presstemperatur 200°C: Es wird anodisiertes Aluminium mit anodisiertem Aluminium verklebt.

### Prüfung

Die Prüflinge werden auf einen Dorn mit Durchmesser 8mm platziert, so dass der Dorn das zweite, runde Substrat vom ersten Substrat wegdrücken kann. Die Maschine fährt mit einem passenden Gegendruckwerkzeug und einer Prüfgeschwindigkeit von 100mm/min zu und drückt den Dorn durch die Probe gegen das runde Substrat. Die Prüfung endet bei maximaler Kraft der Kraft-Weg-Kurve. Der Push-out Wert ist diese maximale Kraft und wird in N/2,5cm² angegeben. Es wird der Mittelwert aus 3 Messungen angegeben.

### Tabelle 1: Prüfwerte der Beispiele und Vergleichsbeispiele

### Schichtdickenverhältn is

Unter Schichtdickenverhältnis soll hier verstanden werden der Quotient aus der Dicke der Trägerfolie und der Summe der Dicken der reaktiven Klebeschichten, d.h.:
Schichtdickenverhältnis = Dicke der Trägerfolie / Summe der Dicken der reaktiven Klebeschichten und dieses sollte größer als 0,3 sein.

| | | Dicke [µm] | Zugscherf estigkeit [MPa] | SAFT-Wert °C | Push-out Kraft nach 120°C [N/2,5c m²] | Push-out Kraft nach 200°C [N/2,5 cm²] | Ausbluttest [%] | Schichtd icken verhältni s |
|---|---|---|---|---|---|---|---|---|
| Beispiel 1 | Reakt.Klebemasse 1, mit Trägerfolie | 200 | 10 | 180 | 300 | 620 | 50 | 1,0 |
| Beispiel 2 | Reakt.Klebemasse 1, mit Trägerfolie | 100 | 9,6 | 170 | 250 | 600 | 50 | 1,0 |
| Beispiel 3 | Reakt.Klebemasse 2, mit Trägerfolie | 100 | 8,5 | 160 | 135 | 500 | 50 | 1,0 |
| Vergleichs beispiel 1 | Reakt.Klebemasse 1, ohne Trägerfolie | 200 | 10 | > 200 | 180 | 400 | 124 | 0 |
| Vergleichs beispiel 2 | Reakt.Klebemasse 2, ohne Trägerfolie | 100 | 8,7 | > 200 | 135 | 350 | 110 | 0 |

Die Prüfwerte in Tabelle 1 zeigen, dass die erfindungsgemäßen Klebefilme (Beispiel 1 bis 3) bei gleicher Dicke die gleiche Zugscherfestigkeiten erreichen wie die Klebefilme ohne Träger (Vergleichsbeispiele 1 und 2). Dies gilt sowohl für die Klebemasse 1 als auch die Klebemasse 2.

Dagegen zeigen die erfindungsgemäßen Klebefilme (Beispiel 1 bis 3) ein geringeres Ausblutverhalten, als die Klebefilme ohne Träger (Vergleichsbeispiele 1 und 2).

Der SAFT-Wert der erfindungsgemäßen Klebefilme ist etwas geringer als bei den Vergleichsbeispielen. Vermutlich liegt das am Erweichen der Trägerfolie. Die Anwendungstemperaturen derartiger Verklebungen liegen aber in der Regel, auch in der Spitze, unter 150°C. In diesem Bereich würde sich kein Unterschied der Beispiele hinsichtlich der Temperaturbeständigkeit der Klebungen zeigen.

Die Push-out Kräfte liegen sowohl bei einer einer Presstemperatur von 120°C als auch bei 200°C auf gleichem oder höherem Niveau als bei den Vergleichsbeispielen.

## Patentansprüche

1. Thermisch aktivierbarer reaktiver Klebefilm, bestehend aus einer Trägerfolie aus thermoplastischem Polyurethan, die mindestens einseitig mit einer latent reaktiven, thermisch aktivierbaren Klebemasse beschichtet ist,
wobei es sich bei der Klebemasse um eine Klebemasse auf Basis Polyurethan handelt, das thermisch aktivierbares Isocyanat enthält.

2. Klebefilm nach Anspruch 1, wobei die Trägerfolie aus thermoplastischem Polyurethan im wesentlichen aus Polyetherpolyurethan besteht.

3. Klebefilm nach Anspruch 1 oder 2, wobei es sich bei dem thermisch aktivierbaren Isocyanat um ein Isocyanat auf Basis Isophorondiisocyanat oder Toluoldiisocyanat handelt.

4. Klebefilm nach einem der vorangegangenen Ansprüche, wobei es sich bei der Klebemasse um eine Klebemasse auf Basis Polyesterpolyurethan handelt.

5. Klebefilm nach einem der vorangegangenen Ansprüche, wobei die Gesamtdicke bei 40 bis 400 µm liegt.

6. Klebefilm nach einem der vorangegangenen Ansprüche, wobei das Verhältnis der Dicke der Trägerfolie aus thermoplastischem Polyurethan zu der Summe der Dicke der Schicht(en) der Klebemasse größer als 0,3 ist und bevorzugt 1 ist.

7. Verwendung eines Klebefilms nach einem der vorangegangenen Ansprüche zur Verklebung von Bauteilen in der Elektronikindustrie.

8. Verwendung eines Klebefilms nach einem der Ansprüche 1 bis 6 zur Verklebung von Textilien.

## Claims

1. Thermally activatable reactive adhesive film, consisting of a backing foil of thermoplastic polyurethane, which is coated at least on one side with a latent-reactive, thermally activatable adhesive compound,
wherein the adhesive compound is an adhesive compound based on polyurethane which contains thermally activatable isocyanate.

2. Adhesive film according to claim 1, wherein the backing foil of thermoplastic polyurethane consists primarily of polyether polyurethane.

3. Adhesive film according to claim 1 or 2, wherein the thermally activatable isocyanate is an isocyanate based on isophorone diisocyanate or toluene diisocyanate.

4. Adhesive film according to any of the preceding claims, wherein the adhesive compound is an adhesive compound based on polyester polyurethane.

5. Adhesive film according to any of the preceding claims, wherein the total thickness is 40 to 400 µm.

6. Adhesive film according to any of the preceding claims, wherein the ratio of the thickness of the backing foil of thermoplastic polyurethane to the sum of the thickness of the layer(s) of the adhesive compound is greater than 0.3 and preferably 1.

7. Use of an adhesive film according to any of the preceding claims for the adhesive bonding of components in the electronics industry.

8. Use of an adhesive film according to any of claims 1 to 6 for the adhesive bonding of textiles.

## Revendications

1. Film adhésif réactif à activation thermique, consistant en une feuille de support en polyuréthane thermoplastique qui est enduite au moins sur une face d'une matière adhésive à réactivité latente et à activation thermique,
dans lequel la matière adhésive est une matière adhésive à base de polyuréthane qui contient un isocyanate à activation thermique.

2. Film adhésif selon la revendication 1, dans lequel la feuille de support en polyuréthane thermoplastique est constitué essentiellement de polyétherpolyuréthane.

3. Film adhésif selon la revendication 1 ou 2, dans lequel l'isocyanate à activation thermique est un isocyanate à base de diisocyanate d'isophorone ou de diisocyanate de toluène.

4. Film adhésif selon l'une quelconque des revendications précédentes, dans lequel la matière adhésive est une matière adhésive à base de polyester polyuréthane.

5. Film adhésif selon l'une quelconque des revendications précédentes, dans lequel l'épaisseur totale est de 40 à 400 µm.

6. Film adhésif selon l'une quelconque des revendications précédentes, dans lequel le rapport de l'épaisseur de la feuille de support en polyuréthane thermoplastique à la somme de l'épaisseur de la couche ou des couches de la matière adhésive est supérieur à 0,3 et est de préférence égal à 1.

7. Utilisation d'un film adhésif selon l'une quelconque des revendications précédentes pour un collage de composants dans l'industrie électronique.

8. Utilisation d'un film adhésif selon l'une quelconque des revendications 1 à 6 pour un collage de textiles.
